# EUROPEAN PATENT APPLICATION

(11) **EP 4 738 161 A1**
(43) Date of publication of application: **06.05.2026**
(21) Application number: 24209762.4
(22) Date of filing: 30.10.2024
(51) Int. Cl.: G06F 21/55, H04L 9/40

(54) **COMBATING SOCIAL ENGINEERING AI SURVEILLANCE MEANS TRAINED ON THREAT KNOWLEDGE AND ATTACK PATTERNS**

(71) Applicant: Deutsche Telekom AG, 53113 Bonn (DE)
(72) Inventor: Jepsen, Kathrin, 12205 Berlin (DE); Haberkorn, Günter, 92262 Birgland/Schwend (DE)
(74) Representative: karo IP

(57) **Abstract**

A method and system for ensuring trusted communication and protection from social engineering attacks on a user equipment (UE) in a communication system, the method comprising:
• Implementing an AI-powered monitoring module on the user equipment or in a cloud environment, the AI-powered monitoring module being trained on social engineering patterns and/or fraud patterns;
• Providing communication content related to the user interaction with his UE to the AI-powered monitoring module, wherein the communication content is content from the user and/or content of a third party, wherein the UE is configured to capture the content of the third party;
• Analyzing by the AI-powered monitoring module the communication content and evaluating a threat-score of the communication content;
• Warning the user, in particular in real-time, if the threat-score is higher than a security-threshold.

## Description

The invention relates to the field of cybersecurity, specifically to methods and systems for protecting a user communicating with a user equipment (UE) from social engineering attacks using AI-powered monitoring. The system is designed to identify and mitigate threats by analyzing communication patterns across various devices and platforms, such as mobile devices, smart home systems, and IoT networks. The invention addresses the challenges posed by evolving social engineering techniques, including phishing, deepfakes, and other fraudulent activities.

In today's world of internet-based communication and mobile connectivity, the threat landscape has become increasingly complex. Advanced security measures are implemented across IT, networking infrastructure, and endpoint devices to address cyber threats, but attackers continue to exploit the human element as a weak link, particularly through social engineering tactics.

Social engineering attacks, such as phishing and caller ID spoofing, manipulate users into divulging sensitive information or performing actions that compromise system security. Attackers often employ techniques such as fake corporate logos, spoofed email signatures, and phishing websites to build trust and increase the success rate of their attacks. Recently, the use of deepfake technologies to imitate legitimate communications has further complicated the situation, leaving users more vulnerable.

Although legislative efforts, such as the German Telecommunications Act (TKG) and the EU's PSD3 regulation, have introduced minimum standards for combating these "trust elements" in fraudulent attacks, they are not sufficient to address the growing sophistication of cybercrime. Moreover, efforts to raise cybersecurity awareness among users have largely failed due to the diverse range of customer mindsets and their differing levels of technical literacy.

A significant challenge remains in the enablement and empowerment of end-users. To truly reduce the effectiveness of social engineering, users need tools that not only inform them about threats but also provide real-time guidance on how to react. Current systems are inadequate in delivering personalized support and enabling users to act quickly and effectively when under attack.

Enablement and Empowerment of Users in the Context of Cybercrime In the effort to enable and empower users to defend against cybercrime, several key challenges arise:
1. Which communication channel is most effective for reaching customers? In today's digital world, which channel is closest to a particular customer's daily interactions?
2. How can attention be drawn to cybersecurity risks when customers perceive no immediate threat and see no need for action? How can support be provided in the moment of a potential threat?
3. How can information be tailored to specific target groups? Given the complexity of cybersecurity, how can support be delivered in a way that is understandable to users? How can communication be made specific and targeted, considering the various entry points (devices, configurations, accounts)?
4. How can the transfer to actionable steps be achieved? For instance, how can users be guided to configure security settings or verify digital content in a way that is comprehensible to them and enables sustainable learning and knowledge transfer?
5. How can enablement and empowerment be made accessible to all customers, considering the need for digital inclusion? This includes ensuring accessibility and the preparation of information in simple, user-selectable language.
6. How can users be supported contextually, given the constantly changing tactics of attackers, ensuring that assistance is provided precisely when needed?

International observations and expert opinions suggest that the threat landscape and the use of such methods will continue to expand. Current industry reports indicate that, for the time being, companies and their customers benefit from the fact that large-scale attacks have not yet occurred. In other words, businesses and their customers learn from each attack-whether successful or not-and use that knowledge to improve defenses. However, the future risk lies not only in the volume of attacks, but also in the simultaneity of multiple attacks, a scenario enabled by the increasing use of artificial intelligence (AI).

Another challenge is the lack of contextual support. When users encounter potential threats, existing solutions do not provide timely, context-sensitive assistance to help users make informed decisions, particularly when multiple entry points, such as email, messaging apps, and web browsers, are involved. Moreover, users often struggle with complex security configurations, making it difficult to understand or act on warnings from security systems.

It is the object of the invention to at least partially overcome the drawbacks of the current state of the art, particularly the limitations of existing cybersecurity measures in addressing social engineering attacks.

The invention is solved by the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter-changeable under appropriate circumstances and that the embodiments of the invention described herein are capable of operation in other sequences than described or illustrated herein.

According to an aspect of the invention, a method is disclosed for ensuring trusted communication and protection from social engineering attacks on a user equipment (UE) in a communication system, the method comprising:
- Implementing an AI-powered monitoring module on the user equipment or in a cloud environment of a network provider, the AI-powered monitoring module being trained on social engineering patterns and/or fraud patterns;
- Providing communication content related to the user interaction with his UE to the AI-powered monitoring module, wherein the communication content is content from the user and/or content of a third party, wherein the UE is configured to capture the content of the third party and/or capture the content of the user;
   ∘ the third party is a possible fraudster; e.g. if the communication is a telephone call between the third party and the user, the UEs can capture, in particular record, the audio signals and send them to the AI-powered monitoring module; in particular, a speech-to-text tool can be associated to the AI-powered monitoring module to transcribe the audio signals into text before providing them to the AI-powered monitoring module;
- Analyzing by the AI-powered monitoring module the communication content and evaluating a threat-score of the communication content;
   ∘ The threat score can quantify the risk level of an interaction, helping cybersecurity systems decide whether to issue warnings, block communications, or take other actions. A higher score indicates a higher likelihood of malicious behavior. The score is calculated by analyzing various factors, such as pattern matching (comparing the interaction to known malicious behaviors), behavioral analysis (detecting anomalies in user actions), reputation analysis (checking the sender's reputation via blacklists or domain history), and content analysis (searching for phishing, social engineering, or deepfake cues). The system may also use historical data to identify patterns of suspicious activity and employ machine learning models to weigh these factors. An example might involve an email from a flagged domain, containing suspicious links and requests for sensitive data. If these elements match known phishing patterns, the threat score rises, potentially triggering an action like a warning. The score is adaptive and can be dynamically adjusted based on user behavior or threat context, improving efficiency by focusing on high-risk cases while reducing false alarms. It allows for scalable, real-time risk assessment, making cybersecurity systems more effective in detecting and preventing attacks.
- Warning the user, in particular in real-time, if the threat-score is higher than a security-threshold.
   ∘ The warning in a cybersecurity system can be technically realized through various methods that integrate with the device or user interface. When a potential threat is detected and the threat score exceeds a predefined threshold, the system triggers a response. This response often involves displaying a visual alert on the user's device. The alert can take the form of a pop-up notification, which appears immediately on the screen, or a more detailed message within the security dashboard or application used by the system. The system could also activate auditory warnings, such as a sound alert, to draw the user's attention quickly. This is particularly useful in critical scenarios where immediate action is required. For more severe threats, the warning might include disabling the user's ability to proceed with the interaction, such as blocking access to a suspicious link or halting a financial transaction. In cloud-based environments, these warnings can be synchronized across multiple devices, meaning a user may receive the warning not only on the device where the threat was detected but also on other connected devices like smartphones, tablets, or computers. In addition, the system can automatically adjust user permissions or network access in response to the warning. For instance, it may lock certain functionalities or require additional verification steps, such as two-factor authentication, before allowing further actions. The warning can also be integrated with existing communication channels, such as sending an email or SMS alert, to ensure the user is informed even if they are not actively using the device at the time the threat is detected.

This method provides a robust system - in particular for real-time threat detection - protecting against social engineering attacks by leveraging the power of AI-based monitoring that is trained accordingly. Today's LLM technology (e.g., ChatGPT), while capable of communication tailored to the recipient, still lacks the necessary knowledge and intelligence, in contrast to the inventive solution, to adequately assess the complex cyber threat landscape. This is because current LLM systems are predominantly trained on standard information (such as scientific and technical facts). They lack sufficient training data in the area of cybersecurity expertise to make appropriate assessments. In short: only the 'good cases' are trained. The comprehensive relevant data required for training threat intelligence is exclusively available to a network provider. By capturing the user and/or the third-party communication content, the invention ensures a comprehensive analysis of all communication activities. Implementing the AI-powered monitoring module either locally on the UE or in the cloud offers deployment flexibility, adapting to the specific technical environment and capabilities of the device or network. The threat-score evaluation adds an additional layer of security, reducing unnecessary alerts and ensuring that users are warned only when genuine threats are detected. This real-time feedback significantly reduces the chances of a user falling victim to social engineering attacks.

In an embodiment, wherein the AI-powered is trained on threat intelligence datasets that include:
- Social engineering attack patterns, Phishing techniques,
- Fraud detection patterns, Deepfake audio, video, and chat detection, and/or Indicators of suspicious behavior in communication channels such as email, messaging, and voice calls.

The AI-powered monitoring module can be trained using supervised learning techniques. In this process, the system is fed a large dataset of known attack patterns, such as social engineering tactics (e.g., phishing emails, fake websites), as well as deepfake media. The training involves labeling these examples, enabling the AI to learn from both malicious and legitimate cases. For instance, training on phishing techniques could involve exposing the AI to emails that contain spoofed sender addresses, misleading links, and other fraudulent elements. As a result, the AI becomes proficient at detecting these features in real-time communications, enhancing its ability to prevent security breaches.

In an embodiment, wherein the communication content includes content from:
- Emails, SMS, iMessages, Phone calls, Video conferences, Web browsing sessions, and/or Interactions with chat bots.

By extending the AI-powered monitoring module's ability to analyze communication content from a wide variety of sources, the invention offers multi-channel protection against diverse cyber threats. This ensures that users are safeguarded not only in traditional text-based communication like emails and SMS, but also in more complex formats such as video conferences or chat bot interactions. The inclusion of web browsing sessions ensures that phishing websites and other fraudulent online content are also analyzed for potential threats. This comprehensive coverage provides users with enhanced security across their entire digital experience.

In an embodiment, wherein the AI-powered monitoring is further configured to interact with security tools on the UE, such as antivirus software, firewalls, or anti-phishing systems, to gather additional indicators for evaluating the threat-score of the communication content. The AI-powered monitoring module can interact with security tools on the user equipment (UE) through API integrations and data exchange protocols. Security tools like antivirus software, firewalls, or anti-phishing systems generate real-time data, including logs of suspicious activities, file scans, and network traffic monitoring. The AI-powered monitoring system accesses this data via APIs (Application Programming Interfaces) provided by the security tools, allowing for seamless communication and information sharing. Once connected, the AI-powered monitoring module can continuously pull relevant data from these security tools, such as detected malware signatures or unusual network behavior. It processes this data to enhance its analysis and improve threat detection accuracy. The AI may also query specific security tools to validate certain aspects of the communication or user actions, such as checking whether a file is flagged as suspicious by the antivirus, or whether the firewall has logged unusual incoming traffic. Additionally, the AI can push commands to these security tools, such as instructing the firewall to block a certain IP address or requesting the antivirus to initiate a deeper scan of a particular file. This interaction enables a multilayered defense system, where the AI-powered monitoring not only analyzes communication content but also uses the insights from other security mechanisms to refine its threat assessments and provide more robust protection.

Integrating the AI-powered monitoring module with existing security tools on the UE, such as antivirus software or firewalls, enhances the system's overall ability to detect and neutralize threats. By accessing additional indicators from these tools, the AI can incorporate broader threat intelligence into its analysis, improving the accuracy of threat detection. This integrated approach allows the system to function as part of a layered security solution, increasing the overall protection of the user's communication channels and enabling a more comprehensive defense against social engineering and fraud attempts.

In an embodiment, wherein the method further comprises:
- Adjusting the security-threshold dynamically based on the user's behavior patterns, context of communication, or the evolving threat landscape, thereby refining the accuracy of the warnings provided to the user.

Dynamically adjusting the security-threshold based on user behavior patterns and context allows the system to become more adaptive to each user's unique communication environment. For example, if a user frequently interacts with certain trusted contacts or platforms, the AI can lower the sensitivity of warnings for these interactions, while maintaining a higher threshold for unfamiliar or suspicious behavior. This dynamic adjustment improves user experience by reducing unnecessary interruptions and tailoring the security level to the specific needs and risks of the user, making the system more effective and user-friendly.

In an embodiment, wherein the warning provided to the user includes recommended actions such as:
- Blocking a suspicious interaction, Verifying the identity of the third party, and/or Updating security settings to mitigate future threats.

By providing the user with actionable recommendations, the invention not only alerts the user to potential threats but also offers guidance on how to mitigate them. For instance, if a suspicious email is detected, the system might recommend blocking the sender or verifying the identity of the third party. These actions help the user immediately address the threat, reducing the likelihood of a successful attack. Furthermore, the system may suggest updating security settings, helping users maintain a higher level of protection over time. This active engagement empowers users to take control of their own security.

In an embodiment, wherein the method further comprises:
- Implementing an encrypted communication channel between the AI-powered monitoring module and the cloud environment, ensuring that sensitive user data remains protected during the analysis and threat evaluation process.

By implementing an encrypted communication channel, the invention ensures that all communication between the UE and the cloud environment is secure and confidential. This prevents attackers from intercepting or manipulating the data being analyzed, thus maintaining the integrity of the threat evaluation process. The use of encryption also complies with data protection regulations, ensuring that sensitive user information is shielded from unauthorized access during transmission.

In an embodiment, wherein the AI-powered monitoring module continuously refines its threat detection algorithms by incorporating feedback from user interactions, such as accepting or rejecting warnings, into its machine learning model.

The ability of the AI-powered monitoring module to learn from user interactions allows it to become more effective over time. By incorporating feedback from user actions-such as accepting or rejecting warnings-the AI can refine its threat detection capabilities. For example, if the system repeatedly issues a warning for a certain type of communication that the user dismisses, it may adjust its sensitivity for future interactions of that nature. This self-learning capability enhances the precision and accuracy of the AI, making it more responsive to the user's communication habits.

In an embodiment, wherein the AI-powered monitoring module is configured to provide alerts via different communication channels (e.g., SMS, push notifications, phone calls) based on the severity of the threat detected and the user's preferences.

By offering multi-channel alerts, the system ensures that users are notified through the most effective and preferred communication methods, whether that be through SMS, push notifications, or phone calls. Additionally, the system tailors its responses based on the severity of the threat, ensuring that critical issues are prioritized and receive more immediate attention. This versatility in alerting allows users to respond more quickly to threats, increasing the overall responsiveness and usability of the system.

In an embodiment, wherein the method of comprises:
- Implementing an AI-powered filtering module on the user equipment, the AI-powered filtering module being trained to detect user interactions related to high-risk activities, wherein high-risk activities can comprise, but need not to be limited to, financial transactions or sensitive data exchanges;
- Providing only communication content related to critical interactions to the AI-powered monitoring module, in particular to the AI-powered monitoring module implemented in the cloud environment, when such high-risk interactions are detected by the AI-powered filtering module.

The addition of an AI-powered filtering module ensures that only high-risk interactions are passed to the AI-powered monitoring module for analysis, which optimizes the use of system resources. By focusing on critical activities, such as financial transactions or the exchange of sensitive data, the filtering module prevents unnecessary analysis of low-risk content, which improves system efficiency. Additionally, this architecture allows for better scalability, as fewer interactions require deep analysis, reducing the load on both the UE and cloud environment. The selective engagement of the monitoring module ensures resource-saving while maintaining high security standards for sensitive interactions.

In an embodiment, wherein the AI-powered filtering module provides the communication content to the AI-powered monitoring module implemented in the cloud environment, only when the AI-powered filtering module detects user interactions related to high-risk activities, thereby minimizing network and device resource usage during low-risk interactions.

This embodiment focuses on optimizing network and device resource usage by only activating the AI-powered monitoring module for high-risk activities. The selective transfer of communication content ensures that bandwidth and processing power are reserved for critical interactions, leading to better performance and cost efficiency. The integration of the filtering module in this way significantly reduces the overhead of constantly processing all communication content, allowing the system to handle large-scale deployments without compromising on response time or accuracy.

In an embodiment, wherein the AI-powered filtering module is trained on user interaction patterns that include but are not limited to:
- Payment transactions,
- Multi-factor authentication processes, and/or
- Entry of sensitive personal data.

The AI-powered filtering module can be trained using supervised learning based on real-world interaction data involving high-risk activities. For example, the system can be trained on payment transactions, where fraudulent behaviors such as unusual transaction amounts or locations are labeled for the AI to learn from. Similarly, the AI can be exposed to multi-factor authentication scenarios, identifying anomalies in the process that might indicate security breaches. Through this training, the filtering module becomes capable of accurately identifying sensitive interactions and triggering monitoring only when warranted.

This specialized training ensures that the filtering module provides highly targeted protection for critical user activities.

In an embodiment, wherein the AI-powered filtering module optimizes resource usage by maintaining the AI-powered monitoring module in an inactive state during non-critical interactions, and only activating it when high-risk user interactions are detected, with the monitoring module executing in a cloud environment to reduce on-device processing.

This embodiment further enhances resource management by keeping the AI-powered monitoring module inactive during non-critical interactions, ensuring that device resources are preserved for when they are truly needed. By running the monitoring module in a cloud environment, the system offloads processing tasks from the UE, resulting in lower power consumption and improved battery life for mobile devices. This cloud-based execution model also allows for scalability, as the processing burden can be shifted dynamically to accommodate multiple users or large datasets without negatively impacting device performance.

According to a second aspect of the invention, a communication system is disclosed, comprising:
- a communication network;
- User equipment (UE) configured to interact with the communication network, the UE being configured to communicate with a third party, wherein the UE and/or the communication network are configured to capture communication content originating from the user and/or the third party, wherein the captured communication content is provided to an AI-powered monitoring module for threat evaluation;
- A communication interface between the UE and a cloud environment for transmitting communication content related to user interactions to the AI-powered monitoring module;
- An AI-powered monitoring module implemented on the UE or in the cloud environment on a server of the network provider, the AI-powered monitoring module being configured to analyze the communication content and evaluate a threat-score based on patterns associated with social engineering attacks and/or fraud;
- A notification system configured to provide real-time warnings to the user through the UE and/or another device associated to the user if the threat-score of the analyzed communication content exceeds a predefined security threshold.

In particular, the communication system is configured to execute the steps according to the method. The communication system can also be named a communication system environment.

This communication environment provides a complete cybersecurity solution, integrating user equipment (UE) with an AI-powered monitoring module that can be deployed locally or in the cloud. By capturing communication content from both the user and third parties, the system ensures that all potential interactions are analyzed for threats. The communication interface allows seamless interaction between the UE and the cloud environment, enabling efficient data transmission for real-time monitoring. The inclusion of a notification system that alerts the user through multiple devices enhances user responsiveness to threats, enabling immediate action when suspicious activity is detected. This holistic design ensures that the environment provides comprehensive protection while maintaining user convenience.

In an embodiment, wherein the communication environment further comprises:
- An AI-powered filtering module implemented on the UE, the AI-powered filtering module being configured to detect high-risk user interactions related to activities including, but not limited to, financial transactions and sensitive data exchanges, and selectively trigger the AI-powered monitoring module based on the detection of such high-risk interactions.

The addition of the AI-powered filtering module in the communication environment ensures that only high-risk interactions trigger the more resource-intensive AI-powered monitoring module. By focusing on interactions such as financial transactions or sensitive data exchanges, the filtering module enhances the selectivity of the system, improving overall resource efficiency. This targeted approach allows the communication environment to handle a large volume of interactions while maintaining high security standards for critical activities, ensuring that the AI-powered monitoring module is used optimally without overloading the system.

### Figures

In the following, preferred implementation examples of the present invention are explained with reference to the accompanying figure:
- Fig. 1:: illustrates a common attack vector in which a user becomes a victim of social engineering;
- Fig. 2:: illustrates an inventive communication system 120;
- Fig. 3:: illustrates an inventive method 300;
- Fig. 4:: shows details of the user equipment and the LLM cyber intelligence inventive communication system 120;
In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

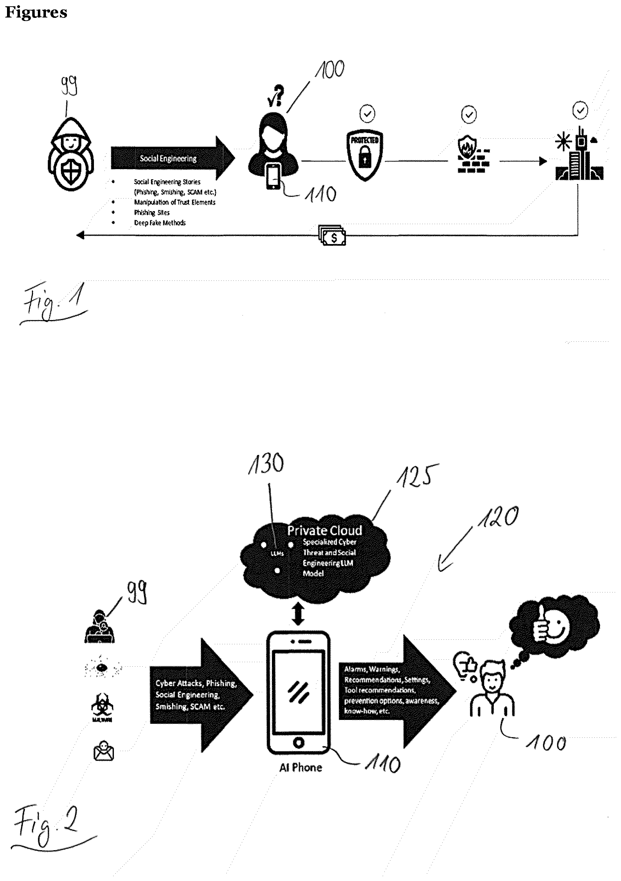

Fig. 1 illustrates a common attack vector in which a user 100 becomes a victim of social engineering, a manipulation tactic often used to compromise security systems. The diagram begins with an attacker 99, symbolized by the figure on the far left, who employs various social engineering techniques. These include phishing (fraudulent emails), smishing (SMS-based phishing), SCAMs, manipulation of trust elements (e.g., impersonating trusted entities), the deployment of phishing websites, and the use of deepfake methods to deceive the target.

The user 100 interacts with a UE 110, and the user is depicted as uncertain (indicated by a question mark) about the legitimacy of the incoming communication. This uncertainty can result in the user unknowingly engaging with a fraudulent message or website, thereby compromising their personal data or financial information.

In this scenario, the actions of the user 100 lead to a request for financial transactions, as shown by the dollar sign icon below the user. Without proper protection, these interactions can allow the attacker 99 to exploit the user and access sensitive data or monetary assets.

The figure also illustrates the importance of working security mechanisms, such as protection systems (illustrated as a lock icon) and firewalls (illustrated as a shield) which might nevertheless be not sufficient if the user trusts the attacker 99.

Fig. 2 illustrates the inventive communication system 120, which implements advanced security measures to protect against social engineering attacks. The communication system 120 includes a cloud environment 125 that hosts an AI-powered monitoring module 130, designed to analyze and mitigate threats in real-time.

In this system 120, the user 100 interacts with a UE 110, which communicates with both the cloud environment 125 and external entities, including third-party services or individuals. The AI-powered monitoring module 130 operates within the cloud environment 125, analyzing communication content transmitted between the UE 110 and other network participants. This content, which may include messages, emails, or transaction data, is evaluated by the AI-powered monitoring module 130 for indicators of malicious activity, such as phishing attempts, social engineering tactics, or fraudulent behavior.

As communication occurs, the AI-powered monitoring module 130 applies its threat analysis algorithms to assess the content, calculating a threat score based on known patterns of social engineering and fraud. If the threat score exceeds a predefined threshold, the system generates a real-time warning to the user 100 through the UE 110. This warning notifies the user of potential risks, allowing them to take preventive action, such as verifying the legitimacy of the communication or halting a financial transaction.

Additionally, the cloud environment 125 enables scalable processing, allowing the AI-powered monitoring module 130 to handle large volumes of data without overwhelming the UE 110. By offloading computationally intensive tasks to the cloud environment 125, the system ensures that security operations are performed efficiently, without compromising the performance of the UE 110. This structure provides a balance between real-time threat detection and resource optimization, ensuring comprehensive protection for the user 100.

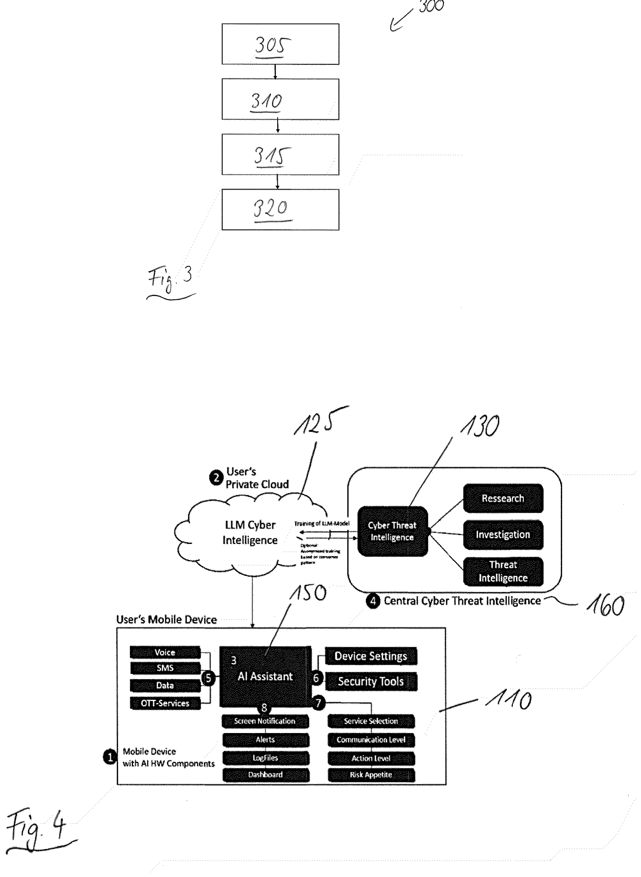

Fig. 3 shows a method 300 according to the invention.

The method comprising of the following steps, in particular in the following order:
step 305: Implementing an AI-powered monitoring module 130 on the UE 110 or in a cloud environment 125 of a network provider, the AI-powered monitoring module 130 being trained on social engineering patterns and/or fraud patterns;
step 310: Providing communication content related to the user interaction with the UE 110 to the AI-powered monitoring module 130, wherein the communication content is content from the user and/or content of a third party, wherein the UE 110 is configured to capture the content of the third party;
step 315: Analyzing, by the AI-powered monitoring module 130, the communication content and evaluating a threat-score of the communication content;
step 320: Warning the user 100, in particular in real-time, if the threat-score is higher than a security threshold.

Fig. 4 shows details of the user equipment and the LLM cyber intelligence inventive communication system 120. The LLM cyber intelligence 130 is another term for the AI-powered monitoring module 130. Hence, both "terms have" the same technical properties.

Figure 4 provides a more detailed illustration of the inventive communication system 120, showcasing how the system integrates various components to protect the user 100 from social engineering attacks. The communication system operates between the UE 110 and the cloud environment 125, where the AI-powered monitoring module 130 is hosted.

In this figure, the UE 110 is shown communicating with the cloud environment 125. The AI-powered monitoring module 130 within the cloud environment 125 continuously monitors the communication content being transmitted between the UE 110 and the external network. This content could include emails, messages, or transactional data, which are subject to threat analysis by the AI-powered monitoring module 130.

The AI-powered monitoring module 130 is trained on patterns of social engineering attacks, fraud, and other malicious activities. It processes the communication data received from the UE 110 in real-time, evaluating the threat level using a predefined algorithm. The system calculates a threat score for each interaction, based on known patterns of phishing, manipulation, or other suspicious behaviors.

If the threat score exceeds a predefined security threshold, the AI-powered monitoring module 130 issues a warning to the user 100 via the UE 110, notifying the user of potential risks, such as fraudulent links or unauthorized requests for personal information. This allows the user 100 to take immediate action, such as verifying the legitimacy of the interaction or aborting the communication.

Additionally, Figure 4 demonstrates the interaction between the UE 110 and the AI-powered filtering module (not shown in prior figures but implied as part of the system), which helps manage network resources by filtering out non-critical communication before sending it to the AI-powered monitoring module 130. This selective filtering ensures that only high-risk communication is processed in the cloud environment 125, optimizing the system's overall performance while maintaining robust security.

The UE 110 can be equipped with Neural Processing Units (NPUs), which are specialized co-processors optimized specifically for executing neural networks and machine learning tasks. These NPUs are critical for enhancing the performance of AI applications by efficiently handling complex neural network operations, significantly boosting the overall AI processing power of the device.

In addition, the UE 110 can include Digital Signal Processors (DSPs), which are optimized for handling digital signal processing tasks, such as processing audio or sensor data. These DSPs are essential for specific AI applications, including speech recognition and image processing, where real-time data processing is required.

The device can also be equipped with Graphics Processing Units (GPUs), which are optimized for parallel computations. GPUs play a crucial role in processing large AI algorithms, particularly for tasks involving extensive neural networks. The parallel processing capabilities of GPUs make them ideal for handling the high computational demands of modern AI models deployed within the UE 110.

Furthermore, the UE 110 can have Image Signal Processors (ISPs), which are responsible for processing image data captured by the device's camera sensors. These ISPs ensure high-quality image processing, which is vital for AI applications such as facial recognition, object detection, and augmented reality.

Additionally, some chipsets within the UE 110 can be equipped with Dedicated AI Cores, which are specifically designed for AI tasks. These dedicated cores operate independently of the CPU and GPU, providing additional processing power exclusively for AI-related functions. This architecture allows for more efficient AI operations without affecting the performance of other system processes within the UE 110.

The UE 110 can also incorporate Sensor Hubs, which integrate and process data from various sensors embedded in the device. These sensor hubs play a vital role in aggregating data from multiple sources, such as accelerometers, gyroscopes, and environmental sensors, enabling the AI-powered monitoring module 130 to access and analyze comprehensive data for enhanced threat detection and response.

In the following additional details of the AI-powered monitoring module 130 will be described: This AI-powered monitoring module 130 can have several key features integrated into the cloud environment 125 for detecting and responding to cybersecurity threats, specifically social engineering attacks.

### Key Features

1. Data Sovereignty and Privacy: The AI-powered monitoring module 130 operates within the cloud environment 125, which may be part of a private cloud infrastructure. By operating within this cloud environment 125, all sensitive data, including internal network information and threat analysis, remains securely within the organization's infrastructure. This ensures complete control over data, enhancing compliance with industry-specific and regional data protection regulations. The system adheres to strict privacy standards, making it suitable for organizations with high security and privacy requirements.
2. Security-Optimized Updates: The AI-powered monitoring module 130 is continuously updated with new Cyber Threat Intelligence (CTI) from external sources, allowing the system to adapt to the latest security threats. These updates are securely integrated into the system without any data leaving the cloud environment 125, minimizing the risk of security breaches or unauthorized access during the update process. This ensures that the system remains agile and responsive to evolving threats, providing robust protection against social engineering and other sophisticated attacks.
3. Personalized Threat Analysis: The AI-powered monitoring module 130 is specifically trained and customized to the unique environment of the organization. It can be tailored to address specific security requirements and threat profiles. The module's ability to perform personalized threat analysis ensures enhanced detection capabilities, enabling it to detect unusual or suspicious activity that may be indicative of a targeted attack. This customization allows the system to adapt its defenses to the specific security needs of the organization, offering bespoke detection and defense mechanisms.
4. Isolated Operating Environment: The AI-powered monitoring module 130 operates in an isolated environment within the cloud environment 125, reducing the risk of compromise from external threats. This isolation ensures that external attacks are more difficult to infiltrate, as the monitoring and processing of data occur in a controlled environment. Furthermore, this isolation allows the organization to implement enterprise-level security measures, such as Intrusion Detection Systems (IDS) and firewalls, which can be tailored to their specific requirements. This approach enhances risk mitigation and limits exposure to external threats.

### Advantages

1. Increased Security: By keeping the AI-powered monitoring module 130 and all sensitive data within the cloud environment 125, the system reduces the risk of data breaches and external attacks. The isolation of the monitoring process ensures that threats are contained and that data is not exposed to unnecessary risks.
2. Customization and Flexibility: The AI-powered monitoring module 130 offers the flexibility to adapt to the unique environment of the organization. It can be trained on specific threat patterns relevant to the organization's needs, ensuring that it can detect and respond to emerging threats more effectively. This flexibility allows for continuous improvement and refinement of the threat detection and defense capabilities.
3. Regulatory Compliance: Operating within a private cloud environment 125 ensures that the system can meet various regulatory requirements related to data sovereignty and privacy. This makes the system suitable for organizations that need to comply with strict data protection laws and guidelines.
4. Seamless Integration of Threat Intelligence: The system is designed to integrate external CTI updates seamlessly. These updates ensure that the AI-powered monitoring module 130 is always equipped with the latest threat intelligence, enabling proactive defense measures without compromising the security of the organization's private environment.

An AI Assistant can be implemented on the UE 110. The AI Assistant 150 can play role in providing real-time, AI-driven support to the user 100 in detecting and responding to social engineering threats.

The AI Assistant 150 can be specifically designed to monitor all communication channels, including emails, messaging apps, and social media, in real time, scanning for potential cyber threats and social engineering attacks. By leveraging the centralized intelligence provided by the AI-powered monitoring module 130 hosted in the cloud environment 125, the AI Assistant 150 can detect phishing attempts, malware links, suspicious behavior patterns, and other cyber threats as they occur.

The AI Assistant 150 can also be capable of delivering contextual and targeted alerts to the user 100. These alerts are personalized based on the user's language preferences and the specific context of the communication, ensuring that they are clear, relevant, and easy to act upon. This makes the cybersecurity advice more understandable for users of varying technical expertise while avoiding unnecessary notifications.

Furthermore, the AI Assistant 150 can provide proactive defense against social engineering attacks. It employs behavioral analysis to assess the behavior of incoming communications and identify signs of manipulation, impersonation, or deceptive language, which are hallmarks of social engineering tactics. When a potential threat is detected, the AI Assistant 150 offers the user 100 real-time guidance on how to handle suspicious interactions, helping to prevent the user from falling victim to phishing, scams, or other malicious activities.

In addition to threat detection, the AI Assistant 150 can enhance the user 100's cybersecurity knowledge by providing ongoing education about current threats and best practices. Through interactive learning, the assistant educates users on recognizing risks, improving their overall awareness and literacy in cybersecurity matters.

The AI Assistant 150 delivers several benefits to the user 100 and the communication system 120. First, it provides enhanced security by detecting and responding to threats in real time, thereby minimizing the window of vulnerability and preventing attacks before they can cause harm. Additionally, it offers user-friendly communication by tailoring alerts and warnings to the user's language preferences, reducing false positives, and ensuring that only relevant information is presented. This makes the security guidance more effective and accessible to the user.

The AI Assistant 150 can also provide advanced protection against social engineering by detecting subtle indicators of manipulation or fraud that traditional security measures might miss. Through clear and timely guidance, it empowers users to avoid these attacks, significantly reducing the risk of successful exploitation. Moreover, the assistant operates seamlessly in the background, ensuring that it does not disrupt the user's experience on the UE 110. Its ability to integrate with the user's communication habits allows it to deliver a more personalized and responsive level of security.

The AI Assistant 150 can operate with several distinctive features. It relies on centralized intelligence provided by the AI-powered monitoring module 130 in the cloud environment 125, ensuring that all devices benefit from the latest threat detection capabilities. While the intelligence is centralized, the AI Assistant 150 performs local execution on the UE 110, allowing it to quickly act on detected threats without relying on continuous cloud connectivity. This localized execution also enhances privacy and security, as sensitive data can be processed directly on the UE 110, minimizing the need for data transmission to external servers.

Additionally, the AI Assistant 150 can provide adaptive communication, adjusting its messaging to suit the user's knowledge level and preferences. This ensures that the cybersecurity advice it offers is both relevant and easy to understand. It also supports privacy-preserving operations, as it only monitors and processes communication services that the user 100 has explicitly authorized for protection, ensuring that user privacy is maintained.

Figure 4 shows a centralized Cyber Threat Intelligence (CTI) system 160, which globally monitors and analyzes cyber threats while continuously refining the Large Language Model (LLM)-based intelligence to protect against advanced attacks. This system enhances the overall capabilities of the communication system 120, providing key functions that support advanced cybersecurity measures for the user 100 and the broader system environment.

The CTI system 160 offers global threat monitoring and analysis, collecting and analyzing comprehensive data from cyberattacks across the world. This includes monitoring a variety of threat vectors such as malware, phishing, ransomware, and advanced persistent threats (APTs). Through the LLM integration, the system can identify attack patterns, techniques, tactics, and procedures (TTPs) used by threat actors. This pattern recognition capability allows the CTI system 160 to detect emerging threats and track the evolution of existing ones, ensuring that the system remains highly adaptive and responsive to global cyberattacks.

Another key feature of the CTI system 160 is the continuous automated threat intelligence updates. The LLM within the system is retrained regularly with new data, keeping it updated with the latest cyberattack methodologies and techniques. These updates are integrated seamlessly, allowing the system to distribute refined intelligence across different devices and networks, ensuring that organizations benefit from the most current and relevant threat insights. This scalability makes the CTI system 160 suitable for various types of enterprises, from small businesses to large-scale organizations.

The CTI system 160 provides advanced threat detection and prediction capabilities. By analyzing both historical data and current trends, the system can predict potential future attacks, allowing organizations to strengthen their defenses before an attack occurs. The CTI system 160 also identifies threats in real-time, enabling organizations to take immediate action and minimize damage from cyberattacks. The system's proactive defense capabilities make it a powerful tool for reducing the impact of cybersecurity incidents.

The system further enhances security through contextual intelligence and insights. It generates context-aware recommendations based on the specific environment and threat landscape of the organization, helping security teams prioritize their actions. Additionally, the LLM in the CTI system 160 is capable of threat attribution, which allows it to attribute specific attacks to groups or actors by recognizing unique patterns in their behavior. This aids in response and mitigation efforts, providing organizations with a deeper understanding of the threats they face.

The CTI system 160 offers significant advantages in cybersecurity. One of its major strengths is the ability to provide comprehensive threat awareness. By analyzing threats on a global scale, the system gives organizations a broad perspective of the threat landscape, capturing insights from various geographic locations and attack sources. This global perspective allows for a holistic understanding of both common and sophisticated attack methods, enabling the system to stay ahead of rapidly evolving threats.

In terms of security posture, the CTI system 160 offers an enhanced defense against emerging threats. The system provides rapid updates on new attack methods, ensuring that organizations can quickly adapt their defenses. Additionally, the LLM's ability to recognize complex attack patterns improves the accuracy of threat detection, reducing false positives and ensuring that critical threats are promptly identified and addressed.

The system is highly scalable and adaptable, offering flexibility for organizations of all sizes. The CTI system 160 can be tailored to meet the specific security needs of an organization, allowing it to focus on threats most relevant to the industry or environment. This scalability makes the system applicable across a wide range of industries, whether for small businesses or large enterprises spread across multiple locations.

Another key advantage is resource efficiency. By centralizing the analysis and training processes, the CTI system 160 reduces the need for decentralized threat monitoring, thereby saving computational resources and bandwidth. Automated updates and intelligence sharing also reduce the operational burden on security teams, allowing them to focus on higher-level strategic tasks rather than manual threat analysis.

The CTI system 160 further strengthens an organization's defenses with its predictive and preventive capabilities. By predicting potential attacks before they occur, the system helps organizations mitigate threats and reduce their impact. This forward-looking approach ensures that security strategies evolve in line with new and emerging attack patterns, allowing organizations to stay ahead of cyberattackers and adapt to the constantly changing threat landscape.

Figure 4 shows the AI Assistant 150, implemented on the UE 110, which provides comprehensive real-time monitoring of communication channels to detect cyber threats. When the user 100 grants access to the AI Assistant 150, the assistant can monitor voice calls, SMS, data transfers, and Over-The-Top (OTT) services, such as WhatsApp, Messenger, and VoIP, ensuring a broad level of oversight across multiple communication platforms. This comprehensive service monitoring capability ensures that no potential cyber threat goes undetected, offering multi-channel surveillance in real time. The AI Assistant 150 can analyze communications as they occur, enabling timely detection and response to threats before they escalate into successful attacks.

In particular, the AI Assistant 150 can comprise the AI-powered filtering module.

In addition to monitoring, the AI Assistant 150 is equipped with advanced threat detection capabilities. Using pattern recognition and anomaly detection, the assistant identifies suspicious activities such as phishing attempts, malware links, social engineering tactics, or unusual behaviors that may indicate a cyber threat. The AI Assistant 150 performs contextual threat assessments to analyze ongoing conversations, ensuring that it can accurately distinguish between benign and malicious behavior. This reduces false positives and enhances the precision of the threat detection process.

The AI Assistant 150 also provides user alerts and guidance. When a threat is detected, the assistant promptly notifies the user 100 with immediate alerts that are both clear and actionable. These notifications are delivered in a language and tone suitable for the user's preferences, making them easy to understand. The assistant can also offer specific advice on how to handle identified threats, such as ignoring a phishing link or avoiding suspicious behavior. This contextual guidance ensures that the user 100 is empowered to make informed decisions in real time, minimizing the risk of falling victim to cyberattacks.

Privacy and security management are key functions of the AI Assistant 150. The assistant operates according to user-controlled permissions, meaning that it only monitors the services and data explicitly authorized by the user 100. This ensures a balanced approach between privacy and security, with the user retaining control over their monitored data. Additionally, the assistant supports local data processing, where sensitive data is processed directly on the UE 110. This minimizes the need for transmitting personal information to external servers, further enhancing the user's privacy.

The AI Assistant 150 offers several advantages to the overall communication system 120. It provides enhanced security by monitoring all communication channels, ensuring that all aspects of the user's digital communication are protected from potential cyber threats. The assistant's real-time threat mitigation capabilities help to reduce the risk of successful cyberattacks, preventing significant damage or data breaches. The assistant operates seamlessly in the background, safeguarding communications without disrupting the normal activities of the user 100. Users receive personalized alerts and guidance that are relevant to their communication habits, making the assistant's interventions more effective.

One of the core advantages of the AI Assistant 150 is its privacy-preserving operations. The user can decide which services and data they want the assistant to monitor, ensuring that their privacy is respected while still benefiting from the assistant's security functions. By processing data locally, the assistant also reduces the risk of privacy breaches, as it limits the exposure of personal information.

The assistant's proactive threat prevention capabilities allow it to recognize early signs of a potential attack, enabling the user to take preventive action. This significantly reduces the likelihood of falling victim to phishing or other cyberattacks. In addition, real-time advice provided by the assistant ensures that users can make informed decisions about potentially dangerous communications, leading to a more secure experience overall.

The AI Assistant 150 is designed to continuously adapt to the user's communication patterns and feedback. This adaptive learning enables it to refine its threat detection capabilities and provide more accurate responses as it learns from past interactions. As new threats emerge, the assistant stays up to date by adapting its responses, ensuring that the user 100 is always protected against the latest cyber risks.

The AI Assistant 150 provides integrated security management by interacting with various security tools on the UE 110, such as antivirus software, firewalls, and other threat detection mechanisms. This interaction enhances its threat assessment capabilities, allowing it to combine data from multiple security sources to improve the overall accuracy of its analyses. By providing a unified control interface, the AI Assistant 150 enables centralized management and configuration of security settings, streamlining the process of updating and optimizing security measures across the device.

The AI Assistant 150 continuously performs real-time security monitoring and assessment, utilizing data from various security tools to detect and analyze threats such as malware, phishing attempts, and system vulnerabilities. It cross-correlates information from different security sources to generate a more comprehensive view of potential threats and their impact on the UE 110 and the communication system 120 as a whole. This real-time monitoring allows the assistant to proactively detect emerging threats and vulnerabilities, thereby enhancing the overall protection of the user 100.

The assistant also provides proactive security recommendations by analyzing current security settings on the UE 110 and suggesting optimizations or adjustments to improve the device's security posture. These recommendations can include updating antivirus definitions, reconfiguring firewall rules, or adjusting other security settings. The AI Assistant 150 provides best-practice guidance based on industry standards, tailored to the specific security environment and configuration of the user 100.

The AI Assistant 150 is capable of automated response and action. In some cases, it can automatically adjust security settings or update tools based on detected vulnerabilities or threats, reducing the need for manual intervention by the user 100. Additionally, the assistant provides timely alerts and notifications, informing the user 100 of potential security issues and offering actionable steps to mitigate risks and improve the overall security of the UE 110.

Another key feature is the enhanced threat intelligence integration. The AI Assistant 150 can leverage real-time data from security tools and threat intelligence feeds to improve its threat detection and response capabilities. Through adaptive learning, the assistant evolves its recommendations and actions based on feedback from ongoing interactions and changes in the threat landscape. This ensures that the assistant remains responsive to the evolving security needs of the user 100 and the communication system 120.

The integration of the AI Assistant 150 with external security tools offers several advantages. It significantly improves the security posture of the UE 110 by combining multiple layers of protection, leveraging data from various security tools to provide a holistic approach to cybersecurity. The assistant's ability to cross-correlate data from different sources improves the accuracy of threat detection, reducing false positives and ensuring that genuine threats are identified and mitigated effectively.

The assistant also enables efficient security management by centralizing the configuration of security settings and tools. This reduces the manual effort required by the user 100, as the assistant automates updates and optimizations. As a result, security management is streamlined, freeing up time for the user 100 to focus on other tasks. The assistant's ability to continuously monitor and assess security settings in real time ensures early detection of vulnerabilities and threats, enabling the user to take timely action before an attack occurs. This proactive threat mitigation capability significantly reduces the likelihood of successful attacks and minimizes the potential impact of vulnerabilities.

In terms of user experience, the AI Assistant 150 offers user-friendly recommendations that are easy to understand and act upon. Notifications are tailored to the context of the user's specific security setup, ensuring that advice is both relevant and timely. The assistant's unobtrusive operation in the background ensures that it safeguards communications without disrupting the normal activities of the user 100.

Furthermore, the assistant continuously adapts to the security needs of the UE 110 and the user 100 through ongoing optimization. By learning from security incidents and user interactions, the assistant refines its recommendations and actions to keep up with the latest threats. This feedback loop enables the assistant to provide increasingly effective responses to security issues, ensuring that the device remains secure in an evolving threat landscape.

One feature is customizable communication levels. The AI Assistant 150 can adjust its language, tone, and complexity based on the communication preferences of the user 100. This allows the assistant to explain complex cyber threats and technical terminology in a way that is understandable to the user, whether the user is an expert in cybersecurity or a general user with limited technical knowledge. The assistant can also provide explanations and guidance relevant to the user's level of expertise, ensuring that all security advice is both accessible and useful.

The assistant's adjustable risk appetite settings offer the user 100 the ability to personalize their risk tolerance level, determining how aggressively the assistant responds to potential threats and security issues. By allowing the user to set personalized risk thresholds, the AI Assistant 150 helps tailor the frequency and urgency of alerts and recommendations according to the user's comfort level. This dynamic risk management prevents information overload, ensuring that the user 100 only receives the most relevant updates and notifications based on their defined risk appetite.

Another feature is the adaptive alerting system, which ensures that alerts and notifications are adjusted based on the user's communication preferences and risk tolerance. By aligning alerts with the user's risk appetite, the assistant can provide more relevant and manageable security information, helping to reduce alert fatigue. This ensures that the user 100 remains engaged with the security notifications without being overwhelmed by excessive or irrelevant alerts.

The assistant also supports user-controlled notification preferences, offering granular control over the types of alerts the user wishes to receive. The user 100 can fine-tune their notification settings, specifying which threats or security events they would like to be informed about, as well as the frequency of updates. The assistant also provides customizable alert channels, allowing users to choose how they want to receive notifications-whether through in-app alerts, email, or SMS. This flexibility ensures that alerts are delivered in a manner that best suits the user's communication preferences.

These customization options offer several key advantages to the user 100. First, they enhance the overall user experience by providing security information in a way that matches the user's level of understanding. This ensures that the advice offered by the AI Assistant 150 is both actionable and easy to follow, making the assistant more relevant and useful in the user's day-to-day interactions with the UE 110. The tailored communication also leads to more personalized interactions, improving the overall relevance of the alerts and advice provided by the assistant.

The improved risk management feature allows the user to align their security monitoring with their personal or organizational risk tolerance. By adjusting the risk appetite settings, the user 100 can avoid being overwhelmed by excessive alerts while ensuring that they are not left vulnerable due to insufficient monitoring. The assistant's ability to prioritize critical threats based on the user's preferences helps reduce the impact of less significant security events, focusing on what matters most.

The reduction of alert fatigue is another major advantage. By managing the flow of information and adjusting the frequency and type of alerts based on the user's preferences, the assistant helps prevent the user from becoming fatigued by unnecessary notifications. This improves user engagement with security alerts, making it easier for the user 100 to stay informed about important security issues without being overwhelmed. The focus on relevant, context-sensitive alerts ensures that the user is more likely to act on critical security advice, leading to better security outcomes.

The AI Assistant 150 also enhances security awareness by providing explanations and guidance that are tailored to the user's expertise level. This helps the user gain a better understanding of cyber threats and best practices, increasing their overall awareness of cybersecurity. By empowering the user to make more informed decisions about their security, the assistant fosters a more proactive approach to cybersecurity management.

The assistant contributes to efficient security management by providing optimized notification handling and adapting its advice based on user-defined risk settings. The assistant's ability to automatically adjust notifications based on the user's risk profile and communication preferences ensures that security measures remain aligned with the evolving needs of the user 100. The assistant's adaptive approach helps ensure that security settings and actions continuously evolve in response to the user's preferences and the changing threat landscape.

One of the features of the AI Assistant 150 is its support for customer-defined alerting preferences. The user 100 can specify the types of alerts they want to receive, such as pop-ups, sound alerts, or emails, and choose their preferred alert channels. Additionally, the user can set the timing and frequency of alerts, deciding whether they prefer real-time notifications, periodic summaries, or alerts only for critical threats. This granularity allows the AI Assistant 150 to deliver alerts that fit seamlessly into the user's daily routine without causing unnecessary interruptions.

The AI Assistant 150 also offers user-controlled notification settings, giving the user 100 control over the level of detail included in notifications. Users can choose between brief summaries or detailed information about detected threats, ensuring that the information is presented in a manner that best suits their needs. The assistant allows the user to customize how notifications are displayed, including format and visibility, ensuring that alerts do not disrupt the usage of the UE 110.

Another feature of the assistant is customizable reporting and dashboards. The user 100 can define the reporting frequency and format, specifying how often they wish to receive security reports, whether daily, weekly, or in a customized interval. These reports can include summaries, detailed analysis, or specific metrics such as threat trends, risk scores, or recent incidents. The assistant also allows the user to design the layout of the security dashboard, ensuring that the displayed metrics and visualizations are relevant to the user's needs. This flexibility makes it easier for the user 100 to stay informed about their security status while keeping track of evolving threats.

The AI Assistant 150 provides adjustable risk appetite settings, allowing the user 100 to personalize their risk thresholds, which determine how aggressively the assistant responds to potential threats and security issues. By adjusting the risk tolerance, the user can influence the frequency and urgency of alerts to ensure they only receive the most critical updates. The assistant can also prioritize alerts based on the user's defined risk appetite, allowing the user 100 to focus on critical issues while filtering out less significant threats.

These features offer several important advantages to the user 100. One key advantage is enhanced user control. The user has full control over how they receive and interact with security information, allowing for a more tailored and relevant experience. By setting their preferences for alert timing and presentation, the user can reduce unnecessary interruptions and manage their security notifications in a way that aligns with their daily routines.

The AI Assistant 150 also improves relevance and engagement by providing focused notifications that are aligned with the user's interests and needs. This makes security monitoring more effective, as the user 100 only receives alerts and reports that are pertinent to their situation. The user-friendly reporting system further enhances engagement by making it easier for the user to understand their security status and take appropriate actions.

Another advantage is efficient risk management. By allowing the user 100 to set their own risk thresholds, the assistant ensures that security measures and notifications are aligned with the user's comfort level and risk tolerance. This helps prevent the user from being overwhelmed by excessive alerts or left vulnerable due to insufficient monitoring. The ability to prioritize alerts based on the user's risk tolerance allows for more effective security management, as the AI Assistant 150 can focus on the most critical issues.

The AI Assistant 150 also enhances usability and satisfaction by offering customizable interaction options. The user can tailor how they interact with the assistant, making the security monitoring process more intuitive and aligned with their preferences. This leads to a better overall user experience, as the assistant becomes more adaptable to individual needs and less intrusive.

The AI assistant 150 contributes to optimal security monitoring by providing effective alert management and adaptive feedback. By enabling the user to customize alert settings and reporting frequency, the assistant ensures that security notifications are delivered in a manner that best supports the user's decision-making and response to threats. The adaptive feedback loop ensures that the assistant continuously improves based on the user's preferences and the evolving security landscape, resulting in more accurate and useful security alerts.

## Claims

1. A method for ensuring trusted communication and protection from social engineering attacks on a user equipment (UE) in a communication system, the method comprising:
• Step (305): Implementing an AI-powered monitoring module (130) on the user equipment (110) or in a cloud environment (125), the AI-powered monitoring module being trained on social engineering patterns and/or fraud patterns;
• Step (310): Providing communication content related to the user interaction with his UE to the AI-powered monitoring module, wherein the communication content is content from the user and/or content of a third party, wherein the UE is configured to capture the content of the third party and/or the user;
• Step (315): Analyzing by the AI-powered monitoring module the communication content and evaluating a threat-score of the communication content;
• Step (320): Warning the user, in particular in real-time, if the threat-score is higher than a security-threshold.

2. The method of claim 1, wherein the AI-powered monitoring module is trained on threat intelligence datasets that include:
• Social engineering attack patterns, Phishing techniques, Fraud detection patterns, Deepfake audio, video, and chat detection, and/or Indicators of suspicious behavior in communication channels such as email, messaging, and voice calls.

3. The method of any of the claims 1 to 2, wherein the communication content includes content from:
• Emails, SMS, iMessages, Phone calls, Video conferences, Web browsing sessions, and/or Interactions with chat bots.

4. The method of any of the claims 1 to 3, wherein the AI-powered monitoring module is further configured to interact with security tools on the UE, such as antivirus software, firewalls, or anti-phishing systems, to gather additional indicators for evaluating the threat-score of the communication content.

5. The method of any of the claims 1 to 4, further comprising adjusting the security-threshold dynamically based on the user's behavior patterns, context of communication, or the evolving threat landscape, thereby refining the accuracy of the warnings provided to the user.

6. The method of any of the claims 1 to 5, wherein the warning provided to the user includes recommended actions such as:
• Blocking a suspicious interaction, Verifying the identity of the third party, and/or Updating security settings to mitigate future threats.

7. The method of any of the claims 1 to 6, further comprising implementing an encrypted communication channel between the AI-powered monitoring module and the cloud environment, ensuring that sensitive user data remains protected during the analysis and threat evaluation process.

8. The method of any of the claims 1 to 7, wherein the AI-powered monitoring module continuously refines its threat detection algorithms by incorporating feedback from user interactions, such as accepting or rejecting warnings, into its machine learning model.

9. The method of any of the claims 1 to 8, wherein the AI-powered monitoring module is configured to provide alerts via different communication channels based on the severity of the threat detected and the user's preferences.

10. The method of any of the claims 1 to 9, further comprising:
• Implementing an AI-powered filtering module on the user equipment, the AI-powered filtering module being trained to detect user interactions related to high-risk activities, in particular the AI-powered filtering module can be part of an AI Assistant 150 of the UE 110;
• Providing only communication content related to critical interactions to the AI-powered monitoring module, in particular to the AI-powered monitoring module implemented in the cloud environment, when such high-risk interactions are detected by the AI-powered filtering module.

11. The method of claim 10, wherein the AI-powered filtering module provides the communication content to the AI-powered monitoring module implemented in the cloud environment, only when the AI-powered filtering module detects user interactions related to high-risk activities, thereby minimizing network and device resource usage during low-risk interactions.

12. The method of claim 11, wherein the AI-powered filtering module is trained on user interaction patterns that comprise but are not limited to:
• Payment transactions,
• Multi-factor authentication processes, and/or
• Entry of sensitive personal data.

13. The method of claim 11, wherein the AI-powered filtering module optimizes resource usage by maintaining the AI-powered monitoring module in an inactive state during non-critical interactions, and only activating it when high-risk user interactions are detected, with the monitoring module executing in a cloud environment to reduce on-device processing.

14. A communication system comprising:
• a communication network;
• User equipment (UE) configured to interact with a communication network, configured to communicate with a third party, wherein the UE and/or the communication network are configured to capture communication content originating from the user and/or the third party, wherein the captured communication content is provided to an AI-powered monitoring module for threat evaluation;
• A communication interface between the UE and a cloud environment for transmitting communication content related to user interactions to the AI-powered monitoring module;
• An AI-powered monitoring module implemented on the UE or in the cloud environment on a server of the network provider, the AI-powered monitoring module being configured to analyze the communication content and evaluate a threat-score based on patterns associated with social engineering attacks and/or fraud;
• A notification system configured to provide real-time warnings to the user through the UE and/or another device associated to the user if the threat-score of the analyzed communication content exceeds a predefined security threshold.

15. The communication system of claim 14, further comprising:
• an AI-powered filtering module implemented on the UE - in particular the AI-powered filtering module can be part of an AI Assistant 150 of the UE 110 - the AI-powered filtering module is being configured to detect high-risk user interactions related to activities including, but not limited to, financial transactions and sensitive data exchanges, and selectively trigger the AI-powered monitoring module based on the detection of such high-risk interactions.
